# FASCICULE DE BREVET EUROPEEN

(11) **EP 4 025 503 B1**
(45) Date de publication et mention de la délivrance du brevet: **01.02.2023**
(21) Numéro de dépôt: 20848848.6
(22) Date de dépôt: 18.12.2020
(51) Int. Cl.: B64G 3/00, G01S 13/933, G01S 7/00, G01S 13/72

(54) **SYSTÈME ET MÉTHODE D'ANALYSE D'ORBITES MONO-SATELLITE**
SYSTEM UND VERFAHREN ZUM ANALYSIEREN VON EINZELNEN SATELLITENUMLAUFBAHNEN
SYSTEM AND METHOD FOR ANALYSING SINGLE SATELLITE ORBITS

(30) Priorité: 18.12.2019 FR 1914790
(43) Date de publication de la demande: 13.07.2022
(73) Titulaire: Airbus Defence and Space SAS, 31402 Toulouse Cedex 4 (FR)
(72) Inventeur: HENNART, Florent, 31410 Toulouse cedex 4 (FR)
(74) Mandataire: Ipside
(86) Numéro de dépôt international: PCT/FR2020/052531
(87) Numéro de publication internationale: WO 2021/123663

(56) Documents cités:
- US-A1- 2015 120 096
- US-A1- 2015 274 328
- US-A1- 2015 323 305

## Description

### Domaine technique de l'invention

La présente invention concerne un dispositif et une méthode avancée d'analyse d'orbites mono-satellite. Plus particulièrement, l'invention concerne un dispositif et une méthode permettant d'identifier au moins une caractéristique intrinsèque d'un satellite observé selon la détermination de sa signature orbitale.

### Technique antérieure

Il est courant de surveiller l'espace, et plus particulièrement les satellites artificiels en orbite autour de la Terre par l'intermédiaire de senseurs d'écoute spatiale tels que des senseurs optiques et des senseurs d'ondes radiofréquences. Les senseurs d'écoute spatiale renvoient généralement une quantité importante de données relatives aux paramètres orbitaux des satellites observés tels que la position et la vitesse des satellites observés.

Les mesures des paramètres orbitaux permettent généralement de calculer la trajectoire orbitale de chaque satellite.

Afin de pouvoir afficher une vue globale et immédiate du trafic des satellites en orbite autour de la Terre, l'état de l'art fait état de représentations graphiques 2D ou 3D représentant la trajectoire d'un ou plusieurs satellites.

Cet état de l'art ne permet pas aux professionnels de la surveillance spatiale d'accéder à une analyse rapide des comportements dynamiques des satellites observés.

La demande de brevet US 2015/274328 A1 décrit une méthode pour estimer l'orbite d'un satellite à partir de mesures effectuées par des senseurs d'écoute spatiale, et pour comparer l'orbite estimée avec l'orbite prévue du satellite. Cela permet notamment de valider la cohérence des mesures avec l'orbite prévue.

La demande de brevet US 2015/120096 A1 décrit une méthode pour déterminer une orbite initiale d'un satellite en utilisant au moins trois observations d'angles. La méthode repose sur une recherche dans une grille de valeurs candidates de la distance au satellite pour trouver le point de la grille et l'orbite initiale correspondante qui correspondent le mieux à toutes les observations selon une métrique d'erreur.

La demande de brevet US 2015/323305 A1 décrit une méthode pour comparer une orbite estimée d'un satellite observé avec des orbites connues mémorisées dans une base de données, afin de déterminer si l'orbite estimée du satellite observé correspond à l'une des orbites connues de la base de données.

### Présentation de l'invention

La présente invention vise à remédier à ces inconvénients avec une approche totalement novatrice.

A cet effet, selon un premier aspect, la présente invention se rapporte à un dispositif de traitement de données orbitales selon la revendication 1.

Selon un second aspect, la présente invention se rapporte à un système d'analyse d'orbites mono-satellite comprenant le dispositif de traitement de données décrit ci-dessus et les senseurs d'écoute spatiale configurés pour observer au moins le satellite en orbite durant son passage dans le champ d'écoute d'au moins un des senseurs.

Avantageusement, le système d'analyse peut comprendre un dispositif de visualisation en communication avec le dispositif de traitement; et l'unité de calcul pouvant être configurée pour définir des plages de valeurs des écarts de positions orbitales ; pour attribuer aux plages de valeurs des écarts de positions orbitales un symbole graphique générique variant de manière graduelle selon les plages de valeurs ; pour afficher, sur le dispositif de visualisation, la matrice carré d'ordre N comprenant les variantes graduelles du symbole attribué aux plages de valeurs des écarts de positions orbitales ; et pour déterminer au moins une caractéristique intrinsèque du satellite observé par analyse graphique des variations graduelles du symbole attribué aux plages de valeurs des écarts de positions orbitales.

Selon un troisième aspect, la présente invention se rapporte à une méthode selon la revendication 4.

Avantageusement, lorsque le système d'analyse comprend de plus un dispositif de visualisation en communication avec le dispositif de traitement de données, la méthode d'analyse peut comprendre une étape de définition de plages de valeurs des écarts de positions orbitales ; une étape d'attribution, aux plages de valeurs des écarts de positions orbitales, d'un symbole graphique générique variant de manière graduelle selon les plages de valeurs ; une étape d'affichage de la matrice carré d'ordre N comprenant les variantes graduelles du symbole attribué aux plages de valeurs des écarts de positions orbitales ; et une étape de détermination d'au moins une caractéristique intrinsèque du satellite observé par analyse graphique des variations graduelles du symbole attribué aux plages de valeurs des écarts de positions orbitales.

Avantageusement, la méthode d'analyse peut comprendre une étape préliminaire d'observation du satellite en orbite autour d'un astre durant son passage dans le champ d'écoute d'au moins un des senseurs.

Selon un quatrième aspect, la présente invention se rapporte à un produit programme d'ordinateur selon les revendications 7 et 8.

### Brève description des figures

D'autres avantages, buts et caractéristiques de la présente invention ressortent de la description qui suit faite, dans un but explicatif et nullement limitatif, en regard des dessins annexés, dans lesquels :
[Fig. 1] la figure 1 est une vue schématique en perspective du système d'analyse d'orbites mono-satellite selon l'invention.
[Fig. 2] la figure 2 est une première vue schématique de l'analyse de trois orbites d'un satellite observé selon le système d'analyse de la figure 1.
[Fig. 3] la figure 3 est une seconde vue schématique selon un affichage matricielle de l'analyse des trois orbites du satellite observé selon le système d'analyse de la figure 1.
[Fig. 4] la figure 4 est un exemple d'une signature orbitale matricielle d'un satellite observé selon le système d'analyse de la figure 1.
[Fig. 5] la figure 5 est une vue d'un organigramme d'une méthode d'analyse d'orbites mono-satellite mise en oeuvre par le système d'analyse selon la figure 1.

### Description des modes de réalisation

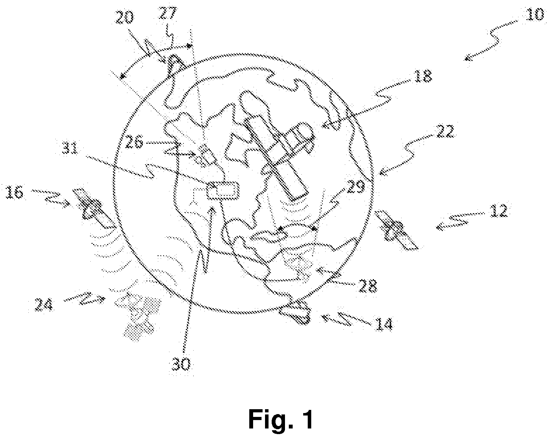

Selon la figure 1, un système 10 d'analyse d'orbites mono satellite 12, 14, 16, 18, 20 est représenté. Le système 10 d'analyse est configuré pour analyser l'orbite d'au moins un satellite 18 parmi une pluralité de satellites 12, 14, 16, 18, 20 observée par le biais de senseurs 24, 26, 28 d'écoute spatiale, la pluralité de satellites 12, 14, 16, 18, 20 étant en orbite autour d'un astre 22, en l'occurrence, autour de la Terre. Le système 10 d'analyse comprend un dispositif de traitement 30 de données orbitales en communication avec les senseurs 24, 26, 28 d'écoute spatiale. De préférence, le dispositif de traitement 30 comprend une unité de calcul 31 configurée pour effectuer des opérations mathématiques sur les données orbitales transmises par les senseurs 24, 26, 28 d'écoute spatiale.

Les senseurs 24, 26, 28 d'écoute spatiale peuvent comprendre, par exemple et de manière non limitative, des antennes radar radiofréquences ou encore des capteurs optiques tels que des caméras ou encore des télescopes. Les senseurs 24, 26, 28 d'écoute spatiale peuvent être aussi bien agencés sur Terre que sur des satellites de surveillance spatiale en orbite terrestre, de préférence en orbite géostationnaire. Les senseurs 24, 26, 28 d'écoute spatiale permettent l'acquisition de positions orbitales et de vitesses du satellite 18 observé durant son passage dans le champ d'écoute 27, 29, dit encore champ de vision, des senseurs 24, 26, 28. Les senseurs 24, 26, 28 d'écoute spatiale permettent au dispositif de traitement 30, plus particulièrement à l'unité de calcul 31, de déterminer des paramètres dynamiques du satellite 18 observé, les paramètres dynamiques étant dénommés paramètres orbitaux.

Le dispositif de traitement 30 de données orbitales est en communication avec les senseurs 24, 26, 28 d'écoute spatiale de sorte que les paramètres orbitaux sont déterminés par l'unité de calcul 31. Le dispositif de traitement 30 de données orbitales permet de traiter aussi bien des signaux radiofréquences provenant de senseurs 24, 26, 28 d'écoute spatiale de type antennes radiofréquence que des captures d'images ou de vidéos provenant de capteurs optiques. Les senseurs 24, 26, 28 d'écoute spatiale peuvent être en communication avec le dispositif de traitement 30 de données orbitales aussi bien par liaison radiofréquence, essentiellement pour les senseurs 24, 26, 28 d'écoute spatiale embarqués en orbite terrestre, qu'en communication filaire essentiellement pour les senseurs 24, 26, 28 d'écoute spatiale sur Terre.

Les paramètres orbitaux du satellite 18 observé peuvent comprendre, par exemple et de manière non-limitative, la position et la vitesse du satellite 18 observé relativement à N instants t₁, t₂, .., t_{N} distincts. La vitesse et la position du satellite aux N instants t₁, t₂, .., t_{N} distincts permettent entre autre, à l'unité de calcul 31, de déterminer, pour le satellite 18 observé, une liste List_t₁, List_t₂,..,List_t_{N} de paramètres orbitaux pour chacun des N instants t₁, t₂, .., t_{N} distincts, chacune des N listes List_t₁, List_t₂,..,List_t_{N} comportant la vitesse et la position Obs_Pos_t₁, Obs_Pos_t₂,., Obs_Pos_t_{N} du satellite 18 observé à un des N instants t₁, t₂, .., t_{N}. De préférence les paramètres orbitaux sont caractérisés par des vecteurs de position et des vecteurs de vitesse définis selon trois dimensions de l'espace.

Selon l'invention, l'unité de calcul 31 du dispositif de traitement 30 de données peut déterminer, à partir de chacune des N listes List_t₁, List_t₂, ..., List_t_{N} de paramètres orbitaux, une fonction temporelle de trajectoire Traj(1)_t, Traj(2)_t, ..., Traj(N)_t orbitale de sorte à obtenir N fonctions temporelles de trajectoires Traj(1)_t, Traj(2)_t, ..., Traj(N)_t, orbitales. Il est à noter, que selon le satellite 18 observé, les N fonctions temporelles de trajectoires Traj(1)_t, Traj(2)_t, ..., Traj(N)_t orbitales peuvent être quasi identiques ou encore très différentes selon l'évolution dynamique du satellite 18 observé dans le temps.

De manière générale, l'observation d'un satellite ne permet pas directement de l'identifier ou encore de déterminer ses caractéristiques intrinsèques telles que par exemple et de manière non limitative, sa mission, sa stratégie de contrôle d'orbite, ou encore son état de santé. L'évolution dynamique d'un satellite 18 observé dépend de ses caractéristiques intrinsèques telles que par exemple, la mission du satellite, sa stratégie de contrôle d'orbite, ou encore son état de santé. Selon l'invention, afin de pouvoir déterminer au moins une caractéristique intrinsèque d'un satellite 18 observé, l'unité de calcul 31 est configurée pour déterminer l'évolution orbitale temporelle du satellite 18 observé selon les écarts entre les N fonctions temporelles de trajectoires Traj(1)_t, Traj(2)_t, ..., Traj(N)_t orbitales déterminées. Les écarts de trajectoires déterminés entre les N fonctions temporelles de trajectoires Traj(1)_t, Traj(2)_t, ..., Traj(N)_t orbitales, sont représentatifs d'une signature orbitale du satellite 18 observé. La signature orbitale d'un satellite 18 observé peut être analysée, soit de manière manuelle par un opérateur, soit de manière numérique par correspondance avec des satellites répertoriés au préalable, de sorte à permettre la reconnaissance d'une caractéristique intrinsèque au satellite 18 observé telle que sa mission. Il conviendra, par exemple, qu'un satellite dit de mission de navigation, présentera une signature orbitale différente d'un satellite dit de mission de télécommunication.

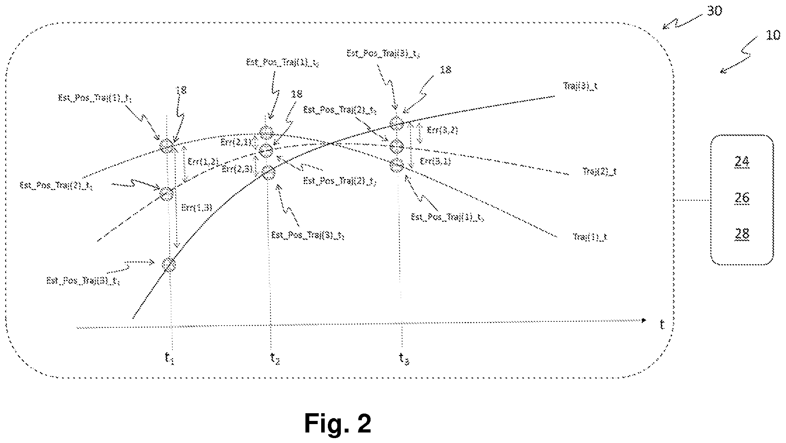

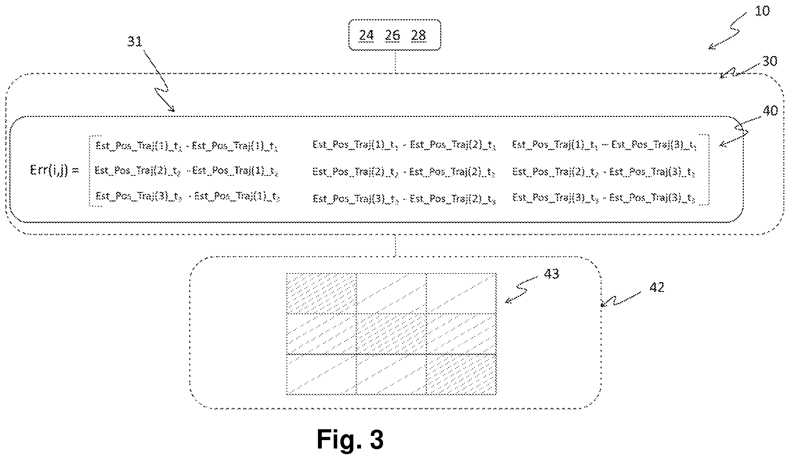

Selon la figure 2 et la figure 3, un exemple non limitatif de détermination d'au moins une caractéristique intrinsèque du satellite 18 observé est illustré. Bien que l'invention puisse être étendue à N observations d'un satellite, notamment à N instants t₁, t₂, ..., t_{N} distincts, à des fins de simplifications de l'exposé de l'invention, la figure 2 et la figure 3, illustrent l'invention selon trois observations d'un satellite 18 à trois instants t₁, t₂, t₃ distincts.

À cet effet, selon la figure 2, l'unité de calcul 31 est configurée pour déterminer trois fonctions temporelles de trajectoires Traj(1)_t, Traj(2)_t, Traj(3)_t orbitales selon trois observations du satellite 18 à trois instants t₁, t₂, t₃ distincts.

A partir des trois fonctions temporelles de trajectoires Traj(1)_t, Traj(2)_t, Traj(3)_t orbitales, l'unité de calcul 31 est configurée pour estimer trois positions orbitales qu'aurait eu le satellite 18 observé aux trois instants t₁, t₂, t₃ distincts sur chacune des trois trajectoires Traj(1)_t, Traj(2)_t, Traj(3)_t orbitales déterminées. En l'occurrence l'unité de calcul 31 est configurée pour estimer neuf positions orbitales Est_Pos_Traj(1)_t₁, Est_Pos_Traj(2)_ₜ₁, Est_Pos_Traj(3)_t₁, Est_Pos_Traj(1)_t₂, Est_Pos_Traj(2)_t₂, Est_Pos_Traj(3)_t₂, Est_Pos_Traj(1)_t₃, Est_Pos_Traj(2)_t₃, Est_Pos_Traj(3)_t₃, soient trois positions orbitales estimées par trajectoire orbitale déterminée.

Selon la figure 2, l'unité de calcul 31 est configurée pour déterminer les écarts Err(i,j) de positions orbitales entre les trajectoires orbitales. Plus particulièrement, selon la figure 2, l'unité de calcul 31 est configurée pour déterminer neuf écarts de positions orbitales Err(1,1), Err(1,2), ... Err(3,3) représentatifs de la différence de positions orbitales entre les 9 positions orbitales estimées Est_Pos_Traj(1)_t₁, Est_Pos_Traj(2)_ₜ₁, Est_Pos_Traj(3)_t₁, Est_Pos_Traj(1)_t₂, Est_Pos_Traj(2)_t₂, Est_Pos_Traj(3)_t₂, Est_Pos_Traj(1)_t₃, Est_Pos_Traj(2)_t₃, Est_Pos_Traj(3)_t₃ selon le même instant t₁, t₂, t₃.

Selon la figure 3, le système 10 d'analyse comprend un dispositif de visualisation 42 en communication avec le dispositif de traitement 30. A cet effet, de manière avantageuse, l'unité de calcul 31 du dispositif de traitement 30 est configurée pour déterminer une matrice carré 40 d'ordre N représentative des écarts Err(i,j) des positions orbitales entre les N positions orbitales estimées Est_Pos_Traj(j)_t selon le même instant t₁, t₂, ..., t_{N}. Selon le mode de réalisation représenté à la figure 3, la matrice carré 40 est une matrice carré 40 d'ordre trois, représentative des écarts Err(i,j) des positions orbitales du satellite 18 observé selon les trois trajectoires Traj(1)_t, Traj(2)_t, Traj(3)_t orbitales déterminées à la figure 2.

Plus particulièrement, la matrice 40 carré d'ordre trois comprend des valeurs normées représentatives de la distance orbitale séparant chacune des positions orbitales estimées Est_Pos_Traj(1)_t₁, Est_Pos_Traj(2)_ₜ₁, Est_Pos_Traj(3)_t₁, Est_Pos_Traj(1)_t₂, Est_Pos_Traj(2)_t₂, Est_Pos_Traj(3)_t₂, Est_Pos_Traj(1)_t₃, Est_Pos_Traj(2)_t₃, Est_Pos_Traj(3)_t₃ selon le même instant t₁, t₂, t₃.

La matrice 40 carré d'ordre trois déterminée est déterminée selon l'écriture de type matricielle transcrite à la figure 3.

Selon la figure 3 le dispositif de visualisation 42 est configuré pour afficher de manière graphique une représentation de la matrice carré 40 d'ordre trois selon un tableau 43 d'ordre trois. Plus particulièrement, l'unité de calcul 31 du dispositif de traitement 30 de données orbitale peut être configurée pour définir des plages de valeurs des écarts Err(i,j) de positions orbitales et d'attribuer aux plages de valeurs des écarts Err(i,j) de positions orbitales, un symbole graphique générique variant de manière graduelle selon les plages de valeurs. De manière avantageuse, mise à part la diagonale de la matrice pour laquelle l'écart est nul, les valeurs de la matrice 40 carré peuvent être issues d'un calcul normé du logarithme décimal de chacun des écarts Err(i,j) de positions orbitales. A cet effet, le dispositif de traitement 30 est configuré pour afficher, sur le dispositif de visualisation 42, le tableau 43 d'ordre trois représentatif de la matrice carré 40 d'ordre trois et comprenant les variantes graduelles du symbole attribué aux plages de valeurs des écarts Err(i,j) de positions orbitales.

Selon la figure 3, le symbole graphique générique illustré est un symbole de type 'rayure' de chaque case du tableau 43, le nombre de rayure pouvant être inversement proportionnel aux écarts Err(i,j) de positions orbitales calculés. D'autres types de symboles générique sont également possibles, tel que, par exemple non limitatif, la couleur des cases du tableau 43 selon laquelle la variation de couleur peut être représentative des plages de valeurs des écarts Err(i,j) de positions orbitales. La représentation graphique de la matrice 40 carré des écarts Err(i,j) de positions orbitales pourra être considérée comme une signature orbitale matricielle propre au satellite 18 observé.

À cet effet, une analyse graphique de l'affichage de la représentation graphique de la matrice 40 carré des écarts Err(i,j) de positions orbitales permet de déterminer au moins une caractéristique intrinsèque du satellite 18 observé. En effet, les variations graduelles du symbole attribué aux plages de valeurs des écarts Err(i,j) de positions orbitales représentent le degré de changement d'orbites du satellite 18 observé. En d'autres termes, selon l'invention, la représentation graphique définie de la matrice 40 carré des écarts Err(i,j) de positions orbitales, met en évidence les changement d'orbites visibles par des cassures dans les variantes du symbole générique. La mise en évidence des changements d'orbites du satellite 18 observé peut permettre à un opérateur une visualisation analytique mono satellite de la signature orbitale matricielle du satellite 18 observé de sorte à pouvoir déterminer au moins une des caractéristiques intrinsèques du satellite 18 observé. Le dispositif de traitement 30 de données orbitales permet donc, grâce à la détermination de la matrice 40 carré, la détermination d'au moins une caractéristique intrinsèque du satellite 18 observé, l'analyse graphique pouvant être aussi bien assistée par un opérateur que par le dispositif de traitement 30, l'unité de calcul 31 du dispositif de traitement 30 pouvant par exemple déterminer une correspondance de la signature orbitale matricielle avec des signatures orbitales matricielles de satellites répertoriés au préalable.

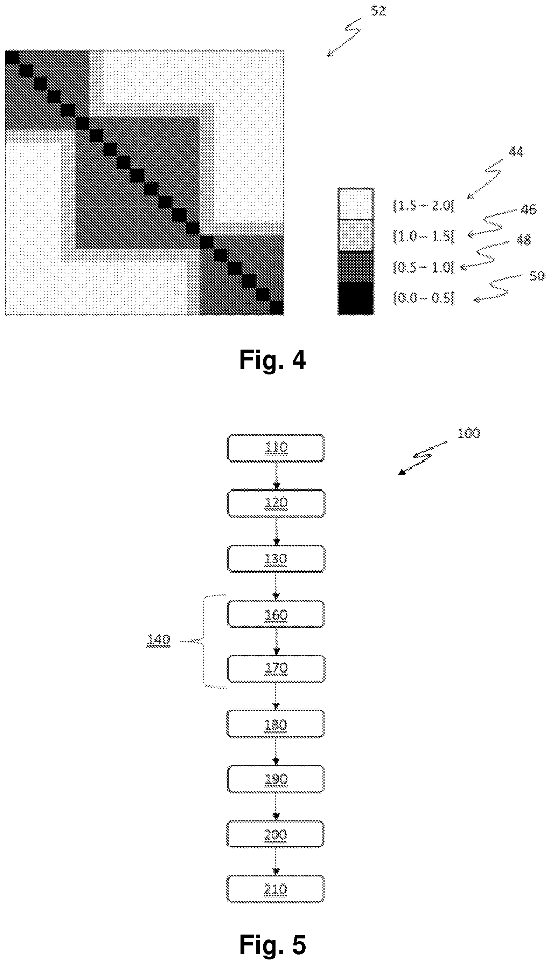

Selon la figure 4, un exemple non limitatif de représentation d'une signature orbitale matricielle 52 est représenté. Selon cet exemple, vingt observations d'un satellite 18 selon vingt instants distincts ont été prises en compte par le dispositif de traitement 30. Selon cet exemple de représentation graphique, et selon les valeurs de la matrice 60 carré d'ordre vingt associé, quatre plages de valeurs représentatives des écarts Err(i,j) de distance entre les positions orbitales sont représentées. Il est à noté que la diagonale de la représentation graphique de la matrice carré dite signature orbitale matricielle 52 comprend le symbole graphique de la plage de valeur la plus faible. En effet, la diagonale de la signature orbitale matricielle 52 est représentative de l'écart Err(i,j) entre un position orbitale estimée et elle-même, soit un écart nul. A titre d'exemple non limitatif, la signature orbitale matricielle 52 représentée à la figure 4, de par sa représentation graphique représentative des changements d'orbite du satellite 18 observé, correspond à un satellite dont la mission est une mission de navigation.

De manière générale, plus le nombre d'observations d'un satellite 18 est élevé, plus élevé pourra être l'ordre de la matrice 40 carré associée au satellite 18 observé, et donc plus l'interprétation intuitive de la signature orbitale matricielle 52 permettant une détermination aisée d'au moins une caractéristique intrinsèque du satellite 18 observé sera aisée.

Selon la figure 5, un exemple d'une méthode 100 d'analyse d'orbites mono-satellite 18 mise en oeuvre par le système 10 d'analyse décrit aux figures 1, 2 et 3 est représenté. La méthode 100 d'analyse comprend trois étapes essentielles à l'analyse des orbites du satellite 18 observé. La première des trois étapes consiste en la détermination 120 d'une liste de paramètres orbitaux du satellite 18 observé à N instants t₁, t₂,..t_{N} distincts de sorte à obtenir N listes de paramètres orbitaux List_t₁, List_t₂, ..., List_t_{N} du satellite 18 observé. A partir des listes de paramètres orbitaux List_t₁, List_t₂, ..., List_t_{N} du satellite 18 observé, la seconde des trois étapes consiste en la détermination 130 d'une fonction temporelle de trajectoire Traj(1)_t, Traj(2)_t, ..., Traj(N)_t orbitale pour chacune des N listes de paramètres List_t₁, List_t₂, ..., List_t_{N} orbitaux du satellite 18 observé de sorte à obtenir N fonctions temporelles de trajectoires Traj(1)_t, Traj(2)_t, ..., Traj(N)_t orbitales. Afin de pouvoir déterminer au moins une caractéristique intrinsèque du satellite 18 observé, tel que sa mission ou encore son état de santé, la troisième des trois étapes consiste en la détermination 140 de l'évolution orbitale temporelle du satellite 18 observé selon les écarts entre les N fonctions temporelles de trajectoires Traj(1)_t, Traj(2)_t, ..., Traj(N)_t orbitales déterminées. L'évolution orbitale du satellite 18 observé est propre au satellite 18 observé de sorte que la dite évolution orbitale est représentative d'une signature orbitale du satellite 18 observé.

Plus particulièrement l'étape de détermination 140 de l'évolution orbitale comprend une étape d'estimation 160 de N positions orbitales du satellite 18 observé selon les N fonctions temporelles de trajectoires Traj1_t, Traj2_t, ..., TrajN_t orbitales à N instants t₁, t₂,...t_{N} distincts de sorte à obtenir N x N positions orbitales estimées Est_Pos_Traj(1)_t₁,...,Est_Pos_Traj(1)_t_{N}, ...Est_Pos_Traj(N)_t_{N} du satellite 18. Enfin, l'étape de détermination 140 de l'évolution orbitale comprend une étape de détermination 170 d'une matrice carré 40 d'ordre N représentative des écarts Err(i,j) des positions orbitales entre les N positions orbitales estimées Est_Pos_Traj(j)_tⱼ - Est_Post_Traj(i)_tⱼ.

De manière additionnelle, la méthode peut comprendre des étapes permettant une visualisation analytique de la signature orbitale du satellite 18 observé de sorte à pouvoir déterminer au moins une caractéristique intrinsèque du satellite 18 observé. A cet égard, la méthode 100 comprend de plus une étape de définition 180 de plages de valeurs des écarts Err(i,j) de positions orbitales de sorte à encadrer numériquement les valeurs issues de la matrice 40 carré d'ordre N. L'étape suivante est une étape d'attribution 190, aux plages de valeurs des écarts Err(i,j) de positions orbitales, d'un symbole graphique générique variant de manière graduelle selon les plages de valeurs. L'attribution de variantes d'un symbole graphique générique selon les plages de valeurs, tel qu'une couleur ou l'épaisseur d'un trait ou encore un nombre de rayure permet à la méthode 100 d'analyse de comporter une étape d'affichage 200 de la matrice carré 40 d'ordre N comprenant les variantes graduelles du symbole attribué aux plages de valeurs des écarts Err(i,j) de positions orbitales. L'affichage représente une signature orbitale matricielle du satellite observé. Finalement, l'étape d'affichage permet à la méthode 100 d'analyse de comporter une étape de détermination 210 d'au moins une caractéristique intrinsèque du satellite 18 observé par analyse graphique des variations graduelles du symbole attribué aux plages de valeurs des écarts Err(i,j) de positions orbitales.

La méthode 100 d'analyse peut être avantageusement une méthode permettant une analyse évolutive en temps réel du comportement dynamique du satellite 18 observé. À cet égard, la méthode 100 peut donc comprendre une étape d'observation 110 du satellite 18 en orbite durant son passage dans le champ d'écoute 27, 29 d'au moins un senseur 24, 26, 28 d'écoute spatial.

Selon l'invention, les étapes de la méthode 100 d'analyse peuvent être programmées dans une unité de contrôle, dénommée de façon générique 'ordinateur', sous forme d'instructions, l'unité de contrôle permettant aussi bien de réaliser les étapes de détermination, d'estimation et d'attribution liés aux paramètres orbitaux du satellite 18 observé, que de contrôler le dispositif de visualisation 42 et également que de contrôler les senseurs 24, 26, 28 d'écoute spatiale. A cet égard, l'unité de contrôle peut comprendre un produit programme d'ordinateur comprenant des instructions qui, lorsque le programme est exécuté par un ordinateur, conduisent celui-ci à mettre en oeuvre les étapes de la méthode 100 d'analyse d'orbites mono-satellite. Selon le mode de réalisation représenté à la figure 3, le dispositif de traitement 30 de données orbitales est en tout point comparable à une unité de contrôle ou un ordinateur permettant d'exécuter un programme comprenant des instructions mettant en oeuvre la méthode 100 d'analyse d'orbites mono-satellite.

Bien que selon le mode de réalisation représenté aux figures 1, 2, 3 et 5, la détermination d'une signature orbitale du satellite observé est réalisée par la détermination d'une signature orbitale matricielle 52 relative aux positions orbitales du satellite 18 observé, l'invention peut s'étendre à la détermination de signatures matricielles orbitales 52 d'un satellite 18 observé depuis la comparaison entre d'autres paramètres orbitaux issu de l'observation direct du satellite 18 et d'estimation desdits autres paramètres orbitaux selon des fonctions temporelles de ces autres paramètres orbitaux.

À cet effet, en connaissant les paramètres orbitaux d'un satellite 12 observé caractérisés par des vecteurs de position et des vecteurs de vitesse définis selon trois dimensions de l'espace, il est possible de transformer les six paramètres composant la position selon les trois dimensions de l'espace et la vitesse selon les trois dimensions de l'espaces en des paramètres orbitaux relatifs au paramètres 'Képlériens' décrivant l'orbite elliptique d'un satellite, à savoir, le demi-grand axe, l'excentricité, l'inclinaison, la longitude du noeud ascendant, l'argument du périastre et l'anomalie moyenne. Des combinaison équivalentes, issues de combinaison de ces paramètres existent, tels que par exemple non limitatif, le mouvement moyen et l'anomalie vraie.

A des fins de notations pour l'invention, une notation des paramètres orbitaux, selon un format standardisé, dite de paramètres orbitaux à deux lignes, ou plus couramment en anglais, Two-Line Elements, très souvent désignés par le sigle TLE est repris ci-après. Les paramètres orbitaux permettent de calculer la position des objets en orbite à tout instant selon les lois de Kepler et Newton. A cet effet, il faut considérer les notations suivantes :
- Soit TLE(i) une liste de paramètres orbitaux estimés au cours du temps. Chaque TLE(i) a un temps de référence TLE_t(i). On peut faire l'hypothèse que l'erreur de l'estimation de l'orbite TLE(i) est minimale à l'instant de référence TLE_t(i)
- Soit Param_Comb(TLE(i),t) une combinaison des paramètres orbitaux à l'instant t
- Soit Param_Comb(TLEₖ,t₁->t₂) la liste temporelle des combinaison des paramètres orbitaux du satellite k entre t₁ et t₂
- Soit Param_Combᵢ(TLEₖ,t₁->t₂) la combinaison i des éphémérides du satellites k entre les instants t₁ et t₂

Par exemple, de manière non limitative, Param_Combᵢ peut être la position selon x, y ou z en repère inertiel ou en repère Terre, la vitesse selon x, y ou z en repère inertiel ou en repère Terre, les paramètres képlériens ou la longitude. Param_Combᵢ(TLEₖ,t₁->t₂) représente donc un vecteur de dimension [nombre de combinaison x ; nombre d'instant discrets]. Selon l'invention, de manière générale, la signature matricielle orbitale du satellite 18 observé est donc caractérisée par une matrice Err(i,j) définie par Err(i,j) = Param_Comb(TLE(i),t) - Param_Comb(TLE(j)_t).

## Revendications

1. Dispositif de traitement (30) de données orbitales configuré pour être en communication avec des senseurs (24, 26, 28) d'écoute spatiale configurés pour observer un satellite (18) en orbite durant son passage dans un champ d'écoute d'au moins un des senseurs ; le dispositif de traitement (30) comprenant une unité de calcul (31) configurée pour :
- déterminer, à partir d'informations communiquées par au moins un desdits senseurs (24, 26, 28), une liste de paramètres orbitaux du satellite (18) observé à N instants (t₁, t₂,...t_{N}) distincts de sorte à obtenir N listes (List_t₁, List_t₂, ..., List_t_{N}) de paramètres orbitaux du satellite (18);
- déterminer une fonction temporelle de trajectoire (Traj(1)_t, Traj(2)_t, ..., Traj(N)_t) orbitale pour chacune des N listes (List_t₁, List_t₂, ..., List_t_{N}) de paramètres orbitaux du satellite (18) observé de sorte à obtenir N fonctions temporelles de trajectoires (Traj(1)_t, Traj(2)_t, ..., Traj(N)_t) orbitales;
- estimer N positions orbitales du satellite (18) observé selon les N fonctions temporelles de trajectoires (Traj1_t, Traj2_t, ..., TrajN_t) orbitales aux instants (t₁, t₂,...t_{N}) distincts de sorte à obtenir N x N positions orbitales estimées (Est_Pos_Traj(1)_t₁,...,Est_Pos_Traj(1)_t_{N}, ...Est_Pos_Traj(N)_t_{N}) du satellite (18);
- déterminer les écarts entre les N fonctions temporelles de trajectoires (Traj(1)_t, Traj(2)_t, ..., Traj(N)_t) orbitales selon la détermination d'une matrice (40) carré d'ordre N représentative des écarts (Err(i,j)) des position orbitales entre les N positions orbitales estimées (Est_Pos_Traj(j)_tⱼ - Est_Post_Traj(i)_tⱼ) selon le même instant (t₁, t₂,..t_{N}) ;
- déterminer l'évolution orbitale temporelle du satellite (18) observé en fonction des écarts ainsi déterminés.

2. Système (10) d'analyse d'orbites mono-satellite (18) comprenant :
- le dispositif de traitement (30) de la revendication 1 ;
- les senseurs (24, 26, 28) d'écoute spatiale configurés pour observer au moins le satellite (18) en orbite durant son passage dans le champ d'écoute (27, 29) d'au moins un des senseurs (24, 26, 28).

3. Système (10) d'analyse selon la revendication précédente, le système (10) d'analyse comprenant de plus ;
- un dispositif de visualisation (42) en communication avec le dispositif de traitement (30) ;
- l'unité de calcul (31) étant configurée pour:
o définir des plages de valeurs des écarts (Err(i,j)) de positions orbitales ;
o attribuer aux plages de valeurs des écarts (Err(i,j)) de positions orbitales un symbole graphique générique variant de manière graduelle selon les plages de valeurs ;
o afficher sur le dispositif de visualisation (42) la matrice carré d'ordre N comprenant les variantes graduelles du symbole attribué aux plages de valeurs des écarts (Err(i,j)) de positions orbitales ;
o déterminer au moins une caractéristique intrinsèque du satellite (18) observé par analyse graphique des variations graduelles du symbole attribué aux plages de valeurs des écarts (Err(i,j)) de positions orbitales, ladite caractéristique intrinsèque correspondant à une mission du satellite, un état de santé du satellite ou une stratégie de contrôle du satellite.

4. Méthode (100) d'analyse d'orbites mono-satellite (18) mise en oeuvre par le système (10) d'analyse de l'une quelconque des revendications 2 ou 3, la méthode (100) comportant des étapes de :
- détermination (120) d'une liste de paramètres orbitaux d'un satellite (18) observé à N instants (t₁, t₂,...t_{N}) distincts de sorte à obtenir N listes de paramètres orbitaux (List_t₁, List_t₂, ..., List_t_{N}) du satellite (18) ;
- détermination (130) d'une fonction temporelle de trajectoire (Traj(1)_t, Traj(2)_t, ..., Traj(N)_t) orbitale pour chacune des N listes de paramètres (List_t₁, List_t₂, ..., List_t_{N}) orbitaux du satellite (18) observé de sorte à obtenir N fonctions temporelles de trajectoires (Traj(1)_t, Traj(2)_t, ..., Traj(N)_t) orbitales;
- estimation (160) des N positions orbitales du satellite (18) observé selon les N fonctions temporelles de trajectoires (Traj1_t, Traj2_t, ..., TrajN_t) orbitales aux instants (t₁, t₂,...t_{N}) distincts de sorte à obtenir N x N positions orbitales estimées (Est_Pos_Traj(1)_t₁,...,Est_Pos_Traj(1)_t_{N}, ...Est_Pos_Traj(N)_t_{N}) du satellite (18);
- détermination (170) d'une matrice carré (40) d'ordre N représentative des écarts (Err(i,j)) des positions orbitales entre les N positions orbitales estimées (Est_Pos_Traj(j)_tⱼ - Est_Post_Traj(i)_tⱼ) selon le même instant (t₁, t₂,...t_{N});
- détermination (140) de l'évolution orbitale temporelle du satellite (18) observé en fonction des écarts ainsi déterminés.

5. Méthode (100) d'analyse selon la revendication précédente pour laquelle le système d'analyse (10) comprend de plus un dispositif de visualisation (42) en communication avec le dispositif de traitement (30), la méthode (100) d'analyse comprenant de plus les étapes de
- définition (180) de plages de valeurs des écarts (Err(i,j)) de positions orbitales ;
- attribution (190), aux plages de valeurs des écarts (Err(i,j)) de positions orbitales, d'un symbole graphique générique variant de manière graduelle selon les plages de valeurs ;
- affichage (200) de la matrice carré (40) d'ordre N comprenant les variantes graduelles du symbole attribué aux plages de valeurs des écarts (Err(i,j)) de positions orbitales ;
- détermination (210) d'au moins une caractéristique intrinsèque du satellite (18) observé par analyse graphique des variations graduelles du symbole attribué aux plages de valeurs des écarts (Err(i,j)) de positions orbitales, ladite caractéristique intrinsèque correspondant à une mission du satellite, un état de santé du satellite ou une stratégie de contrôle du satellite.

6. Méthode (100) d'analyse selon l'une quelconque des revendications 4 à 5 comportant une étape préliminaire de :
- observation (110) du satellite (18) en orbite autour d'un astre (22) durant son passage dans le champ d'écoute (27, 29) d'au moins un des senseurs (24, 26, 28).

7. Produit programme d'ordinateur comprenant des instructions qui, lorsque le programme est exécuté par un ordinateur, conduisent celui-ci à mettre en oeuvre les étapes suivantes :
- détermination (120) d'une liste de paramètres orbitaux d'un satellite (18) observé à N instants (t₁, t₂,...t_{N}) distincts de sorte à obtenir N listes de paramètres orbitaux (List_t₁, List_t₂, ..., List_t_{N}) du satellite (18) ;
- détermination (130) d'une fonction temporelle de trajectoire (Traj(1)_t, Traj(2)_t, ..., Traj(N)_t) orbitale pour chacune des N listes de paramètres (List_t₁, List_t₂, ..., List_t_{N}) orbitaux du satellite (18) observé de sorte à obtenir N fonctions temporelles de trajectoires (Traj(1)_t, Traj(2)_t, ..., Traj(N)_t) orbitales;
- estimation (160) des N positions orbitales du satellite (18) observé selon les N fonctions temporelles de trajectoires (Traj1_t, Traj2_t, ..., TrajN_t) orbitales aux instants (t₁, t₂,...t_{N}) distincts de sorte à obtenir N x N positions orbitales estimées (Est_Pos_Traj(1)_t₁,...,Est_Pos_Traj(1)_t_{N}, ...Est_Pos_Traj(N)_t_{N}) du satellite (18);
- détermination (170) d'une matrice carré (40) d'ordre N représentative des écarts (Err(i,j)) des positions orbitales entre les N positions orbitales estimées (Est_Pos_Traj(j)_tⱼ - Est_Post_Traj(i)_tⱼ) selon le même instant (t₁, t₂,...t_{N}).

8. Produit programme d'ordinateur selon la revendication 7 dans lequel, lorsque le programme est exécuté par l'ordinateur, les instructions conduisent celui-ci à mettre en oeuvre les étapes suivantes :
- attribution (190), à des plages de valeurs des écarts (Err(i,j)) de positions orbitales, d'un symbole graphique générique variant de manière graduelle selon les plages de valeurs ;
- contrôle d'un dispositif de visualisation (42) pour afficher la matrice carré (40) d'ordre N comprenant les variantes graduelles du symbole attribué aux plages de valeurs des écarts (Err(i,j)) de positions orbitales.

## Patentansprüche

1. Vorrichtung zur Verarbeitung (30) von Orbitaldaten, konfiguriert, um mit Sensoren (24, 26, 28) zum Abhören des Weltraums in Kommunikationsverbindung zu stehen, die konfiguriert sind, um einen Satelliten (18) im Orbit zu überwachen, während er ein Abhörfeld von mindestens einem der Sensoren durchläuft; wobei die Verarbeitungsvorrichtung (30) eine Recheneinheit (31) umfasst, die konfiguriert ist, zum:
- Ermitteln, ausgehend von Informationen, die von mindestens einem der Sensoren (24, 26, 28) übermittelt werden, einer Liste von Orbitalparametern des überwachten Satelliten (18) zu N unterschiedlichen Zeitpunkten (t₁, t₂, ..., t_{N}), um N Listen (List_ti, List_t₂, ..., List_t_{N}) von Orbitalparametern des Satelliten (18) zu erhalten;
- Ermitteln einer Zeitfunktion einer orbitalen Trajektorie (Traj(1)_t, Traj(2)_t, ..., Traj(N)_t) für jede der N Listen (List_ti, List_t₂, ..., List_t_{N}) von Orbitalparametern des überwachten Satelliten (18), um N Zeitfunktionen von orbitalen Trajektorien (Traj(1)_t, Traj(2)_t, ..., Traj(N)_t) zu erhalten;
- Schätzen von N Orbitalpositionen des überwachten Satelliten (18), gemäß den N Zeitfunktionen von orbitalen Trajektorien (Traj1_t, Traj2_t, ..., TrajN_t), zu den unterschiedlichen Zeitpunkten (t₁, t₂, ..., t_{N}), um N × N geschätzte Orbitalpositionen (Est_Pos_Traj(1)_t₁, ..., Est_Pos_Traj(1)_t_{N}, ..., Est_Pos_Traj(N)_t_{N}) des Satelliten (18) zu erhalten;
- Ermitteln der Abweichungen zwischen den N Zeitfunktionen von orbitalen Trajektorien (Traj(1)_t, Traj(2)_t, ..., Traj(N)_t), gemäß der Ermittlung einer quadratischen Matrix (40) der N-Ordnung, repräsentativ für die Abweichungen (Err(i,j)) von Orbitalpositionen zwischen den geschätzten N Orbitalpositionen (Est_Pos_Traj(j)_tⱼ - Est_Post_Traj (i)_tⱼ), zum gleichen Zeitpunkt (t₁, t₂, ..., t_{N});
- Ermitteln der zeitlichen Orbitalentwicklung des überwachten Satelliten (18) in Abhängigkeit von den so ermittelten Abweichungen.

2. System (10) zur Analyse des Orbits von Einzelsatelliten (18), umfassend:
- die Verarbeitungsvorrichtung (30) nach Anspruch 1;
- die Sensoren (24, 26, 28) zum Abhören des Weltraums, konfiguriert, um mindestens den Satelliten (18) im Orbit zu überwachen, während er das Abhörfeld (27, 29) von mindestens einem der Sensoren (24, 26, 28) durchläuft.

3. Analysesystem (10) nach dem vorhergehenden Anspruch, wobei das Analysesystem (10) ferner umfasst;
- eine Anzeigevorrichtung (42), in Kommunikationsverbindung mit der Verarbeitungsvorrichtung (30) ;
- die Recheneinheit (31), konfiguriert, zum:
∘ Definieren der Wertebereiche der Abweichungen (Err(i,j)) von Orbitalpositionen;
o Zuordnen, zu den Wertebereichen der Abweichungen (Err(i,j)) von Orbitalpositionen, eines generischen grafischen Symbols, das gemäß den Wertebereichen graduell variiert;
o Anzeigen an der Anzeigevorrichtung, (42) der quadratischen Matrix der N-Ordnung, die die graduellen Varianten des Symbols umfasst, das den Wertebereichen der Abweichungen (Err(i,j)) von Orbitalpositionen zugeordnet ist;
o Ermitteln mindestens eines intrinsischen Merkmals des überwachten Satelliten (18), durch grafische Analyse der graduellen Variationen des Symbols, das den Wertebereichen der Abweichungen (Err(i,j)) von Orbitalpositionen zugeordnet ist, wobei das intrinsische Merkmal einer Mission des Satelliten, einem Gesundheitszustand des Satelliten oder einer Satellitensteuerungsstrategie entspricht.

4. Verfahren (100) zur Analyse des Orbits von Einzelsatelliten (18), das vom Analysesystem (10) nach einem der Ansprüche 2 oder 3 umgesetzt wird, wobei das Verfahren (100) Schritte beinhaltet, zum:
- Ermitteln (120) einer Liste von Orbitalparametern eines überwachten Satelliten (18) zu N unterschiedlichen Zeitpunkten (t₁, t₂, ..., t_{N}), um N Listen von Orbitalparametern (List_ti, List_t₂, ..., List_t_{N}) des Satelliten (18) zu erhalten;
- Ermitteln (130) einer Zeitfunktion einer orbitalen Trajektorie (Traj(1)_t, Traj(2)_t, ..., Traj(N)_t) für jede der N Listen von Orbitalparametern (List_ti, List_t₂, List_t_{N}) des überwachten Satelliten (18), um N Zeitfunktionen von orbitalen Trajektorien (Traj(1)_t, Traj(2)_t, ..., Traj(N)_t) zu erhalten;
- Schätzen (160) der N Orbitalpositionen des überwachten Satelliten (18), gemäß den N Zeitfunktionen der orbitalen Trajektorien (Traj1_t, Traj2_t, ..., TrajN_t), zu den unterschiedlichen Zeitpunkten (t₁, t₂, ...t_{N}), um N × N geschätzte Orbitalpositionen (Est_Pos_Traj(1)_t₁, ..., Est_Pos_Traj(1)_t_{N}, ..., Est_Pos_Traj(N)_t_{N}) des Satelliten (18) zu erhalten;
- Ermitteln (170) einer quadratischen Matrix (40) der N-Ordnung, repräsentativ für die Abweichungen (Err(i,j)) von Orbitalpositionen zwischen den geschätzten N Orbitalpositionen (Est_Pos_Traj(j)_tⱼ - Est_Post_Traj (i)_tⱼ), zum gleichen Zeitpunkt (t₁, t₂, ..., t_{N});
- Ermitteln (140) der zeitlichen Orbitalentwicklung des überwachten Satelliten (18) in Abhängigkeit von den so ermittelten Abweichungen.

5. Analyseverfahren (100) nach dem vorhergehenden Anspruch, wobei das Analysesystem (10) ferner eine Anzeigevorrichtung (42) in Kommunikationsverbindung mit der Verarbeitungsvorrichtung (30) umfasst, wobei das Analyseverfahren (100) ferner die Schritte umfasst, zum
- Definieren (180) von Wertebereichen der Abweichungen (Err(i,j)) von Orbitalpositionen;
- Zuordnen (190), zu den Wertebereichen der Abweichungen (Err(i,j)) von Orbitalpositionen, eines generischen grafischen Symbols, das gemäß den Wertebereichen graduell variiert;
- Anzeigen (200) der quadratischen Matrix (40) der N-Ordnung, die die graduellen Varianten des Symbols umfasst, das den Wertebereichen der Abweichungen (Err(i,j)) von Orbitalpositionen zugeordnet ist;
- Ermitteln (210) von mindestens einem intrinsischen Merkmal des überwachten Satelliten (18), durch grafische Analyse der graduellen Variationen des Symbols, das den Wertebereichen der Abweichungen (Err(i,j)) von Orbitalpositionen zugeordnet ist, wobei das intrinsische Merkmal einer Mission des Satelliten, einem Gesundheitszustand des Satelliten oder einer Satellitensteuerungsstrategie entspricht.

6. Analyseverfahren (100) nach einem der Ansprüche 4 bis 5, einen einleitenden Schritt beinhaltend, zum:
- Überwachen (110) des Satelliten (18) im Orbit um einen Himmelskörper (22), während er das Abhörfeld (27, 29) von mindestens einem der Sensoren (24, 26, 28) durchläuft.

7. Computerprogrammprodukt, das Anweisungen umfasst, die, wenn das Programm von einem Computer ausgeführt wird, diesen dazu veranlassen, die folgenden Schritte durchzuführen:
- Ermitteln (120) einer Liste von Orbitalparametern eines überwachten Satelliten (18) zu N unterschiedlichen Zeitpunkten (t₁, t₂, ..., t_{N}), um N Listen von Orbitalparametern (List_ti, List_t₂, ..., List_t_{N}) des Satelliten (18) zu erhalten;
- Ermitteln (130) einer Zeitfunktion einer orbitalen Trajektorie (Traj(1)_t, Traj(2)_t, ..., Traj(N)_t) für jede der N Listen von Orbitalparametern (List_ti, List_t₂, List_t_{N}) des überwachten Satelliten (18), um N Zeitfunktionen von orbitalen Trajektorien (Traj(1)_t, Traj(2)_t, ..., Traj(N)_t) zu erhalten;
- Schätzen (160) der N Orbitalpositionen des überwachten Satelliten (18), gemäß den N Zeitfunktionen der orbitalen Trajektorien (Traj1_t, Traj2_t, ..., TrajN_t), zu den unterschiedlichen Zeitpunkten (t₁, t₂, ..., t_{N}), um N × N geschätzte Orbitalpositionen (Est_Pos_Traj(1)_t₁, ..., Est_Pos_Traj(1)_t_{N}, ..., Est_Pos_Traj(N)_t_{N}) des Satelliten (18) zu erhalten;
- Ermitteln (170) einer quadratischen Matrix (40) der N-Ordnung, repräsentativ für die Abweichungen (Err(i,j)) von Orbitalpositionen zwischen den geschätzten N Orbitalpositionen (Est_Pos_Traj(j)_tⱼ - Est_Post_Traj(i)_tⱼ), zum gleichen Zeitpunkt (t₁, t₂, ..., t_{N}).

8. Computerprogrammprodukt nach Anspruch 7, wobei, wenn das Programm vom Computer ausgeführt wird, die Anweisungen diesen dazu veranlassen, die folgenden Schritte durchzuführen:
- Zuordnen (190), zu den Wertebereichen der Abweichungen (Err(i,j)) von Orbitalpositionen, eines generischen grafischen Symbols, das gemäß den Wertebereichen graduell variiert;
- Steuern einer Anzeigevorrichtung (42) zum Anzeigen der quadratischen Matrix (40) der N-Ordnung, die die graduellen Varianten des Symbols umfasst, das den Wertebereichen der Abweichungen (Err(i,j)) von Orbitalpositionen zugeordnet ist.

## Claims

1. A device (30) for processing orbital data configured to be in communication with spatial listening sensors (24, 26, 28) configured to observe a satellite (18) in orbit during its passage in a listening field of at least one of the sensors; the processing device (30) comprising a computing unit (31) configured to:
- determine, from information communicated by at least one of said sensors (24, 26, 28), a list of orbital parameters of the observed satellite (18) at N distinct time points (t₁, t₂, ..., t_{N}) so as to obtain N lists (List_t₁, List_t₂, ..., List_t_{N}) of orbital parameters of the satellite (18);
- determine an orbital trajectory time function (Traj(1)_t, Traj(2)_t, ..., Traj(N)_t) for each of the N lists (List_t₁, List_t₂, ..., List_t_{N}) of orbital parameters of the observed satellite (18) so as to obtain N orbital trajectory time functions (Traj(1)_t, Traj(2)_t, ..., Traj(N)_t);
- estimate N orbital positions of the observed satellite (18) according to the N orbital trajectory time functions (Traj1_t, Traj2_t, ..., TrajN_t) at the distinct time points (t₁, t₂, ...t_{N}) so as to obtain N x N estimated orbital positions (Est_Pos_Traj(1)_t₁, ..., Est_Pos_Traj(1)_t_{N}, ..., Est_Pos_Traj(N)_t_{N}) of the satellite (18);
- determine the deviations between the N orbital trajectory time functions (Traj1_t, Traj2_t, ..., TrajN_t) according to the determination of an N-order square matrix (40) representative of the deviations (Err(i,j)) of the orbital positions between the N estimated orbital positions (Est_Pos_Traj(j)_tⱼ - Est_Pos_Traj(i)_tⱼ) according to the same time point (t₁, t₂, ..., t_{N});
- determine the temporal orbital evolution of the observed satellite (18) as a function of the deviations thus determined.

2. A system (10) for analysing single-satellite (18) orbits comprising:
- the processing device (30) according to claim 1;
- the spatial listening sensors (24, 26, 28) configured to observe at least the satellite (18) in orbit during its passage in the listening field (27, 29) of at least one of the sensors (24, 26, 28).

3. The analysis system (10) according to the preceding claim, the analysis system (10) further comprising:
- a display device (42) in communication with the processing device (30);
- the computing unit (31) being configured to:
∘ define ranges of values of the deviations (Err(i,j)) of orbital positions;
∘ assign to the ranges of values of the deviations (Err(i,j)) of orbital positions a generic graphic symbol gradually varying according to the ranges of values;
∘ display on the display device (42) the N-order square matrix comprising the gradual variations of the symbol assigned to the ranges of values of the deviations (Err(i,j)) of orbital positions;
∘ determine at least one intrinsic characteristic of the observed satellite (18) by graphical analysis of the gradual variations of the symbol assigned to the ranges of values of the deviations (Err(i,j)) of orbital positions, said intrinsic characteristic corresponding to a mission of the satellite, a condition state of the satellite or a control strategy of the satellite.

4. A method (100) for analysing single-satellite (18) orbits implemented by the analysis system (10) of any one of claims 2 or 3, the method (100) including the steps of:
- determining (120) a list of orbital parameters of an observed satellite (18) at N distinct time points (t₁, t₂, ..., t_{N}) so as to obtain N lists of orbital parameters (List_t₁, List_t₂, ..., List_t_{N}) of the satellite (18);
- determining (130) an orbital trajectory time function (Traj(1)_t, Traj(2)_t, ..., Traj(N)_t) for each of the N lists of orbital parameters (List_t₁, List_t₂, . List_t_{N}) of the observed satellite (18) so as to obtain N orbital trajectory time functions (Traj(1)_t, Traj(2)_t, ..., Traj(N)_t);
- estimating (160) the N orbital positions of the observed satellite (18) according to the N orbital trajectory time functions (Traj1_t, Traj2_t, ..., TrajN_t) at the distinct time points (t₁, t₂, ..., t_{N}) so as to obtain N x N estimated orbital positions (Est_Pos_Traj(1)_t₁, ..., Est_Pos_Traj(1)_t_{N}, ..., Est_Pos_Traj(N)_t_{N}) of the satellite (18);
- determining (170) an N-order square matrix (40) representative of the deviations (Err(i,j)) of the orbital positions between the N estimated orbital positions (Est_Pos_Traj (j)_tⱼ - Est_Pos_Traj (i)_tⱼ) according to the same time point (t₁, t₂, ...t_{N});
- determining (140) the temporal orbital evolution of the observed satellite (18) as a function of the deviations thus determined.

5. The analysis method (100) according to the preceding claim, wherein the analysis system (10) further comprises a display device (42) in communication with the processing device (30), the analysis method (100) further comprising the steps of
- defining (180) ranges of values of the deviations (Err(i,j)) of orbital positions;
- assigning (190), to the ranges of values of the deviations (Err(i,j)) of orbital positions, a generic graphic symbol gradually varying according to the ranges of values;
- displaying (200) the N-order square matrix (40) comprising the gradual variations of the symbol assigned to the ranges of values of the deviations (Err(i,j)) from orbital positions;
- determining (210) at least one intrinsic characteristic of the observed satellite (18) by graphical analysis of the gradual variations of the symbol assigned to the ranges of values of the deviations (Err(i,j)) of orbital positions, said intrinsic characteristic corresponding to a mission of the satellite, a condition state of the satellite or a control strategy of the satellite.

6. The analysis method (100) according to any one of claims 4 to 5, including a preliminary step of:
- observing (110) the satellite (18) in orbit around a celestial body (22) during its passage in the listening field (27, 29) of at least one of the sensors (24, 26, 28) .

7. A computer program product comprising instructions which, when the program is executed by a computer, cause the latter to implement the following steps:
- determining (120) a list of orbital parameters of an observed satellite (18) at N distinct time points (t₁, t₂, ..., t_{N}) so as to obtain N lists of orbital parameters (List_t₁, List_t₂, ..., List_t_{N}) of the satellite (18);
- determining (130) an orbital trajectory time function (Traj(1)_t, Traj(2)_t, ..., Traj(N)_t) for each of the N lists of orbital parameters (List_t₁, List_t₂, . List_t_{N}) of the observed satellite (18) so as to obtain N orbital trajectory time functions (Traj(1)_t, Traj(2)_t, ..., Traj(N)_t);
- estimating (160) the N orbital positions of the observed satellite (18) according to the N orbital trajectory time functions (Traj1_t, Traj2_t, ..., TrajN_t) at the distinct time points (t₁, t₂, ..., t_{N}) so as to obtain N x N estimated orbital positions (Est_Pos_Traj(1)_t₁, ..., Est_Pos_Traj(1)_t_{N}, ..., Est_Pos_Traj(N)_t_{N}) of the satellite (18);
- determining (170) an N-order square matrix (40) representative of the deviations (Err(i,j)) of the orbital positions between the N estimated orbital positions (Est_Pos_Traj (j)_tⱼ - Est_Pos_Traj (i)_tⱼ) according to the same time point (t₁, t₂, ..., t_{N}).

8. The computer program product according to claim 7 wherein, when the program is executed by the computer, the instructions cause the latter to implement the following steps:
- assigning (190), to ranges of values of the deviations (Err(i,j)) of orbital positions, a generic graphic symbol gradually varying according to the ranges of values;
- controlling a display device (42) to display the N-order square matrix (40) comprising the gradual variants of the symbol assigned to the ranges of values of the deviations (Err(i,j)) of orbital positions.
